# EUROPEAN PATENT SPECIFICATION

(11) **EP 3 005 859 B1**
(45) Date of publication and mention of the grant of the patent: **11.04.2018**
(21) Application number: 14804526.3
(22) Date of filing: 31.03.2014
(51) Int. Cl.: A01G 31/02, A01G 31/06

(54) **VEGETABLE CARRYING BOX**
TRAGEKISTE FÜR GEMÜSE
BOÎTE DE SUPPORT POUR LÉGUME

(30) Priority: 30.05.2013 CN 201310209842; 30.05.2013 CN 201310209841; 30.05.2013 CN 201310209594; 30.05.2013 CN 201310209291
(43) Date of publication of application: 13.04.2016
(73) Proprietor: Haier Group Corporation, Qingdao, Shandong 266101 (CN); Qingdao Haigao Design & Manufacturing Co., Ltd, Shandong 266101 (CN)
(72) Inventor: WU, Jian, Shandong 266101 (CN); ZHOU, Shu, Shandong 266101 (CN); FEI, Zhaojun, Shandong 266101 (CN); LIU, Haibo, Shandong 266101 (CN)
(74) Representative: Ziebig, Marlene
(86) International application number: PCT/CN2014/074366
(87) International publication number: WO 2014/190797

(56) References cited:
- EP-A2- 0 803 188
- CN-A- 102 648 695
- CN-U- 202 211 047
- CN-U- 202 374 825
- DE-U1-202012 010 066
- JP-A- H06 233 635
- JP-A- 2006 288 238
- KR-A- 20090 119 649
- KR-A- 20130 017 254
- US-A- 6 067 750

## Description

### FIELD OF THE INVENTION

The present invention relates to the field of vegetable preservation or growing technologies, and in particular, to a vegetable carrying box.

### BACKGROUND OF THE INVENTION

A soilless culture technology is an important vegetable production technology. At present, in the field of soilless culture, multiple cultivation troughs are usually placed on a supporting rack in layers, and the multiple-layer cultivation troughs are interconnected by using pipeline, so that nutrient solution flows successively from a cultivation trough at the top to a cultivation trough at the lowest layer. An existing cultivation trough is a simple rectangular trough. When the nutrient solution flows inside the cultivation trough, there are flow blind angles for the nutrient solution near the edges and corners of the cultivation trough, causing non-uniform distribution of nutrient ingredients, and affecting growth of vegetables. In addition, cultivation in layers causes a problem of shading, that is, an upper layer cultivation trough shades a lower layer cultivation trough, leading to lack of light for the lower layer cultivation trough. Pipeline connecting portions between layers of cultivation troughs and between the cultivation trough and a pump are connected by using pipe joints. When this connection manner is used, disassembly and assembly are cumbersome, and a problem of leaking is easy to occur after multiple times of disassembly and assembly.

In addition, a refrigerator is usually used to preserve vegetables at present. This preservation manner is used to preserve picked vegetables, and there is a problem that a preservation time is short.

Korean patent application KR 2013-0017254 A is directed to a seed tray for hydroponics comprising a tray part provided with a high-level water supply inlet and a low-level water outlet located at opposite end portions of the tray part, so that the nutrient solution flows from the water supply inlet to the water outlet under the action of gravity.

### SUMMARY OF THE INVENTION

A brief summary of the present invention is given below to provide basic explanations of some aspects of the present invention. It should be understood that this summary is not an exhaustive summary of the present invention. This summary is not intended to determine key or important parts of the present invention, and is not intended to limit the scope of the present invention either. The objective of this summary is merely to provide some concepts in a simplified manner, as a preface of more detailed descriptions provided later.

The present invention provides a vegetable carrying box, to resolve problems that an existing cultivation trough has flow blind angles for nutrient solution, which causes non-uniform distribution of nutrient ingredients and affects growth of vegetables, and a refrigerator is used to preserve vegetables, which has a short preservation time.

The present invention provides a vegetable carrying box, which includes a solution carrying box provided with a high-level liquid inlet and a low-level liquid outlet that are opposite to each other, where an area, which is between the liquid inlet and the liquid outlet, in the solution carrying box is provided with protruding diversion partitions to form a zigzag flow passage, and atomizer is disposed in the flow passage. The protruding diversion partitions are arranged side by side in the solution carrying box and every two adjacent protruding diversion partitions are disposed separately at two sides of the solution carrying box.

Preferably, an atomizer cover plate is disposed above the atomizer. The atomizer cover plate may comprise a top plate, wherein two sides of the top plate are connected to a supporting plate that bends downward, and a lower end of the supporting plate is fixedly connected to the solution carrying box. The atomizer may be preferably located at a middle part of the solution carrying box.

Preferably, the protruding diversion partitions are parallel to each other. Preferably, every two adjacent diversion partitions have an overlapping portion in a projection direction perpendicular to the diversion partition. Preferably, the protruding diversion partitions are strip plates vertically disposed.

Preferably, both axes of the liquid inlet and the liquid outlet are horizontally disposed and are parallel to each other. Preferably, the liquid inlet and the liquid outlet are located at a same side of the solution carrying box.

Preferably, the vegetable carrying box further comprises a vegetable shelf disposed above the solution carrying box, and the vegetable shelf may be disposed overhead relative to the top of the flow passage. Through holes may be formed on the vegetable shelf. Preferably, at least one pluggable hole plug is correspondingly disposed inside at least one of the through holes.

Preferably, the vegetable shelf has multiple through hole arranging areas, each of the through hole arranging areas has a cross-shaped rib, the cross-shaped rib delimits the through hole arranging area into four quadrant areas, and each quadrant in the four quadrant areas is provided with one through hole.

In the vegetable carrying box provided in the present invention, a zigzag flow passage is formed between an area between a liquid inlet and a liquid outlet, so that nutrient solution forms a nutrient solution flow inside the entire vegetable carrying box, which flows through the entire vegetable carrying box; therefore, nutrient solution ingredients inside the vegetable carrying box are relatively uniform, which is beneficial to balanced growth of vegetables. In addition, atomizer atomizes the nutrient solution, so that the nutrient solution uniformly volatilizes to an upper space of the vegetable carrying box in a form of mist, to facilitate absorption by vegetable, and meeting a nutrition requirement for vegetable growth. Besides, the atomizer may be used to control an atomization amount of the nutrient solution, so as to control a growth speed of the vegetables, so that the vegetables are correspondingly in a regular growth state, a slow growth state, or a zero growth state, to extend a preservation time of the vegetables.

### BRIEF DESCRIPTION OF THE DRAWINGS

FIG. 1 is an exploded diagram of a vegetable carrying box according to an embodiment of the present invention.
FIG. 2 is a schematic structural diagram of a solution carrying box in FIG. 1.
FIG. 3 is a schematic diagram of the solution carrying box and a vegetable shelf in FIG. 1.
FIG. 4 is a schematic diagram of the solution carrying box and an illumination component in FIG. 1.
FIG. 5 is a schematic structural diagram of an embodiment of a light source and a light guide plate in FIG. 1.
FIG. 6 is a schematic diagram of a part of the vegetable carrying box in FIG. 1 from another viewing angle.

### DETAILED DESCRIPTION OF THE INVENTION

Embodiments of the present invention are described below with reference to the accompanying drawings. Elements or features described in one figure or one implementation manner of the present invention may be combined with elements and features shown in one or more other figures or implementation manners. It should be noted that, for the purpose of clarity, representations and descriptions of parts and processing that are irrelevant to the present invention and known to one of ordinary skill in the art are omitted in the accompanying drawings and illustration.

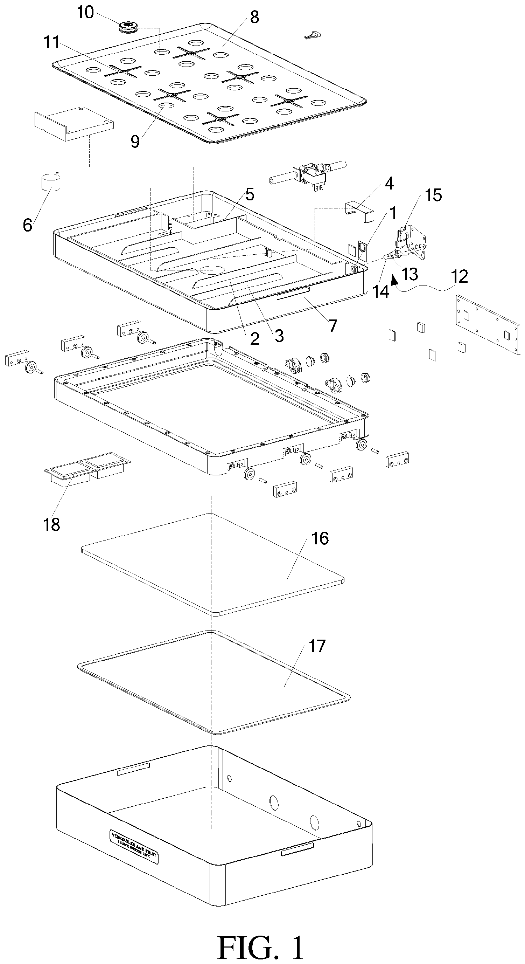

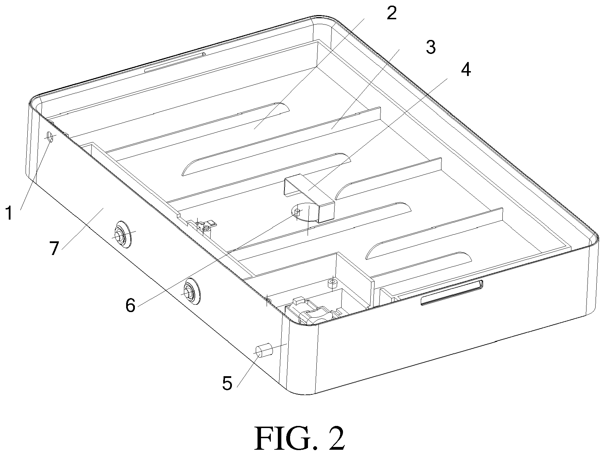

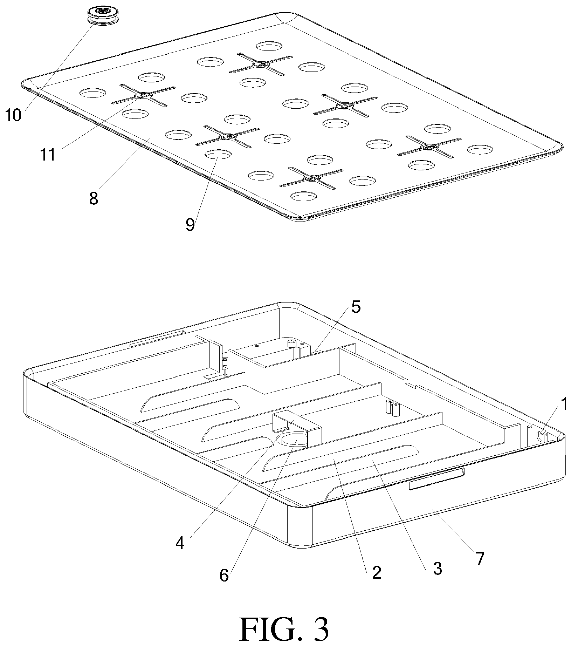

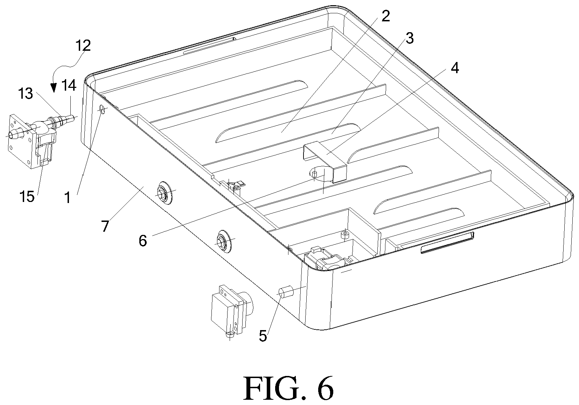

As shown in FIG. 1 to FIG. 6, a vegetable carrying box provided in an embodiment of the present invention includes a solution carrying box 7 provided with a high-level liquid inlet 1 and a low-level liquid outlet 5 that are opposite to each other, a vegetable shelf 8 disposed above the solution carrying box 7, and an illumination component 22 disposed below the solution carrying box 7, where an area, which is between the liquid inlet 1 and the liquid outlet 5, in the solution carrying box 7 is provided with protruding diversion partitions 3 to form a zigzag flow passage 2, and an atomizer 6 is disposed in the flow passage 2. The vegetable shelf 8 is disposed above the top of the flow passage 2 to form an overhead space. On one hand, when the vegetable shelf 8 is used to carry vegetables, roots of the vegetables extend inside the overhead space while the vegetables are disposed above the vegetable shelf 8, which facilitates controlling a growing state of the vegetables to achieve the objective of preservation. On the other hand, the roots of the vegetables hang above the flow passage 2, avoiding unfavorable impacts caused by the roots on the flow of a nutrient solution, facilitating respiration of the roots, and improving an ability of absorbing nutrients.

In the vegetable carrying box provided in the foregoing solution, the zigzag flow passage 2 is formed in an area between the liquid inlet 1 and the liquid outlet 5, so that a nutrient solution forms a nutrient solution flow inside the entire vegetable carrying box, which flows through the entire vegetable carrying box, and no blind angle exists; therefore, nutrient solution ingredients inside the vegetable carrying box are relatively uniform, which is beneficial to balanced growing of vegetables. Besides, the nutrient solution flows along the flow passage 2 under the action of gravity, and does not fill up the entire solution carrying box 7, so that there is an overhead space between the flow passage 2 and the vegetable shelf 8; and the atomizer 6 is used to atomize the nutrient solution, and the atomized nutrient solution spreads to the entire overhead space to be absorbed by roots of vegetables, so that the nutrient solution uniformly volatilizes to an upper space of the vegetable carrying box in a form of mist, to facilitate absorption by vegetables, and meeting a nutrition requirement of vegetable growth. Besides, the atomizer 6 may be used to control an atomization amount of the nutrient solution, so as to control a growth speed of the vegetables, so that the vegetables are correspondingly in a regular growth state, a slow growth state, or a zero growth state, to extend a preservation time of the vegetables and to achieve a best preservation effect. Especially, when the vegetables are in the zero growth state, the freshness of the vegetables can be retained for a relatively long time.

In an actual use, the nutrient solution enters into the solution carrying box 7 from the high-level liquid inlet 1 of the solution carrying box 7, flows along the zigzag flow passage 2 under the action of gravity, and fills up the entire flow passage 2, until being discharged from the low-level liquid outlet 5. The nutrient solution flows along the zigzag flow passage 2, so that the nutrient solution flows through every corner of the solution carrying box 7, ensuring the freshness and nutrition uniformity of the nutrient solution throughout the entire solution carrying box 7.

Further, based on the foregoing embodiment, a water swivel 12 is disposed on each of the liquid inlet 1 and the liquid outlet 5, and at least one of the water swivels includes a steel-core joint and a flexible material layer that is wrapped around the steel-core joint. The water swivel 12 is connected to the liquid inlet 1 and the liquid outlet 5 in a plugging manner to facilitate operations of disassembly; in addition, the flexible material layer that is wrapped around the steel-core joint can perform self-correction during plugging due to an elastic action of the flexible material layer, so as to ensure a sealing effect after the plugging.

Further, based on the foregoing embodiment, the steel-core joint includes a circular truncated cone section 13 and a circular tube section 14 that is connected to a small diameter end of the circular truncated cone section 13, and a conical surface of the circular truncated cone section 13 faces to the inside of the vegetable carrying box. The circular tube section 14 has a guide function, to facilitate plugging installation. The circular truncated cone section 13 is used to achieve sealing. Because a diameter of a peripheral surface of the circular truncated cone section 13 increases gradually, it can adapt to the liquid inlet 1 and/or the liquid outlet 5 of multiple bore diameters. Even if the liquid inlet 1 and/or the liquid outlet 5 is enlarged due to abrasion after multiple times of plugging installation, because the circular truncated cone section 13 has an ability of adapting to multiple bore diameters, good sealing performance can still be ensured.

Further, based on the foregoing embodiment, a solenoid valve 15 is connected to the steel-core joint. The solenoid valve 15 may use a normally closed solenoid valve. Using the normally closed solenoid valve can avoid a problem that, after the water swivel 12 is plugged out form the liquid inlet 1, the nutrient solution in the pipeline leaks.

Further, based on the foregoing embodiment, the vegetable shelf 8 is a plate-shaped component, and multiple through holes 9 are laid out on the vegetable shelf 8. Vegetables are inserted in the through holes 9, roots of the vegetables are in an overhead space between the vegetable shelf 8 and the flow passage 2, and the roots of the vegetables cause no unfavorable impacts on flowing of the nutrient solution. The roots of the vegetables are in an overhead space, so that, on one hand, the roots of the vegetables can be in full contact with the air, facilitating respiration of the roots; on the other hand, the roots can absorb the atomized nutrient solution from the overhead space for growing.

Further, based on the foregoing embodiment, a hole plug 10, which is pluggable, is disposed inside the through hole 9. The hole plug 10 is disposed in the through hole 9 that has no vegetables inserted. The hole plug 10 is disposed in the through hole 9 that has no vegetables inserted, so that, in one hand, the atomized nutrient solution can be prevented from spreading from the through hole 9 to cause a waste, on the other hand, dirt can be prevented from dropping into the solution carrying box 7 from the through hole 9 to contaminate the nutrient solution.

Further, based on the foregoing embodiment, the vegetable shelf 8 has multiple through hole arranging areas, each through hole arranging area has a cross-shaped rib 11, the cross-shaped rib 11 delimits the through hole arranging area into four quadrant areas, and each quadrant in the four quadrant areas is provided with one through hole 9. By using this structure, rigidness of the vegetable shelf 8 is enhanced to enable the vegetable shelf 8 to support the weight of the vegetables, so that the vegetables are above the nutrient solution in an overhead manner, and the roots of the vegetables are in the air to absorb the atomized nutrient solution, to facilitate controlling a growth state of the vegetables by better controlling an atomization amount of the nutrient solution, so that the vegetables are correspondingly in a regular growth state, a slow growth state, or a zero growth state, to achieve the objective of preserving the vegetables.

The atomizer 6 may be, but is not limited to, an ultrasonic atomizer.

Further, based on the foregoing embodiment, to protect the atomizer 6 and to prevent the roots of the vegetables, which grow downward, from harming the atomizer 6, an atomizer cover plate 4 is disposed above the atomizer 6 in a covering manner, and the atomizer cover plate 4 has a function of covering the atomizer 6. The atomizer cover plate 4 may also change a direction of atomized vapor to spread all around, helping the atomized vapor to spread inside the entire solution carrying box 7, so that vegetables cultivated everywhere in the vegetable carrying box can absorb nutrients more fully.

Further, based on the foregoing embodiment, the atomizer cover plate 4 includes a top plate, two sides of the top plate are connected to a supporting plate that bends downward, and a lower end of the supporting plate is fixedly connected to the solution carrying box 7. The atomizer cover plate 4 may use this structure to have a simple connection and reliable performance.

Further, based on the foregoing embodiment, multiple diversion partitions 3 are arranged side by side in the solution carrying box 7, and every two adjacent diversion partitions 3 are disposed separately at two sides of the solution carrying box 7. By using this structure, the flow passage 2 has a longer flow path inside the solution carrying box 7, and the solution can flow through the entire space of the solution carrying box 7; besides, a time of flowing inside the flow passage 2 by the nutrient solution is longer, so that vegetables cultivated everywhere in the vegetable carrying box can absorb nutrients fully for growing.

Further, based on the foregoing embodiment, to reduce flow resistance of the nutrient solution during a flowing process and to ensure stability of the flowing of the nutrient solution, the multiple diversion partitions 3 are parallel to each other.

Further, based on the foregoing embodiment, to ensure that an entire twisting flow passage 2 is formed inside the solution carrying box 7, and to prevent the nutrient solution from directly flowing from one side of the solution carrying box 7 to another side of the solution carrying box 7, every two adjacent diversion partitions 3 have an overlapping portion in a projection direction perpendicular to the diversion partition 3, and the flowing nutrient solution changes direction of flowing in the overlapping portion.

Further, based on the foregoing embodiment, the diversion partition 3 is a strip plate vertically disposed. The strip plate can guide the fluid, and also save space inside the solution carrying box 7.

Further, based on the foregoing embodiment, both axes of the liquid inlet 1 and the liquid outlet 5 are horizontally disposed and are parallel to each other, so that the vegetable carrying box can be disassembled and assembled along a horizontal direction, facilitating plugging the liquid inlet 1 and the liquid outlet 5 with an external pipeline system.

Further, based on the foregoing embodiment, the liquid inlet 1 and the liquid outlet 5 are located at a same side of the solution carrying box 7, so that when the vegetable carrying box is disassembled and assembled along a horizontal direction, plugging of the liquid inlet 1 and the liquid outlet 5 can be completed simultaneously.

Further, based on the foregoing embodiment, to ensure that the atomized nutrient solution can spread inside the entire solution carrying box 7 uniformly, the atomizer 6 is disposed at a middle part of the solution carrying box 7.

An illumination component 22 is disposed at the bottom of the vegetable carrying box provided in this embodiment of the present invention. For a stack-up use, the illumination component 22 at the bottom of an upper layer vegetable carrying box provides sufficient light to a lower layer vegetable carrying box, so that vegetables in the lower layer vegetable carrying box can obtain sufficient light for growing or preservation.

Further, based on the foregoing embodiment, the illumination component 22 includes a light source and a light guide plate 16, the light source and the light guide plate 16 are disposed cooperatively, and the light guide plate 16 is configured to make light emitted by the light source distributed uniformly.

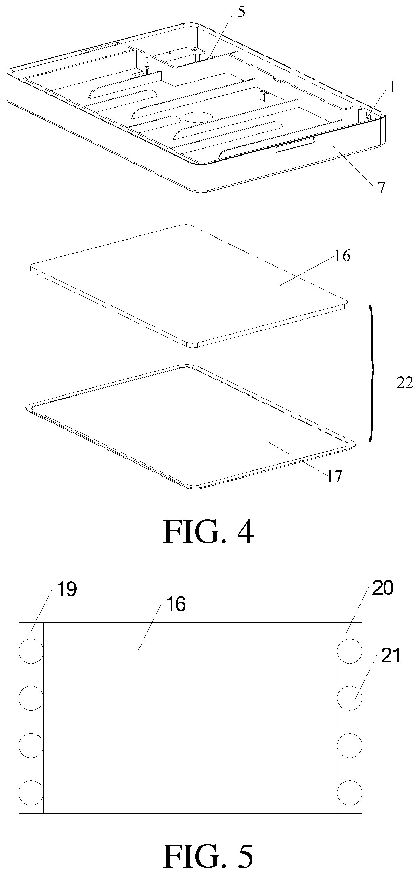

Further, based on the foregoing embodiment, as shown in FIG. 5, as an optional implementation manner, the light source includes a first linear light source 19 and a second linear light source 20, which are separately symmetrically disposed on two sides of the light guide plate 16. The first linear light source 19 and the second linear light source 20 both include multiple unit light sources 21 that are arranged linearly. When the first linear light source 19 or the second linear light source 20 emits light, light is guided by the light guide plate 16, so that the whole light guide plate 16 emits light uniformly, that is, the linear light source is converted into a planar light source. In this way, light utilization can be improved by a maximum degree, and energy consumption can be reduced, thereby effectively saving energy.

Further, based on the foregoing embodiment, all of the multiple unit light sources 21 are white light sources, so that light in the using space is close to natural light, which can satisfy an illumination requirement of vegetable growing or preservation. It is found through research that growing or preservation of some kinds of vegetables mainly require spectrums corresponding to red light and blue light, therefore, as an optional implementation manner, the multiple unit light sources 21 include red light source and blue light source, which can facilitate vegetable growing or preservation. The multiple unit light sources 21 also include a red light source, a blue light source, and a white light source, so that spectrums can be selected flexibly according to requirements of vegetable growing, to facilitate better vegetable growing or preservation, and to extend vegetable preservation time. In an actual use, the multiple unit light sources 21 are disposed at the bottom of the vegetable carrying box in a detachable manner, and when a problem occurs in a particular unit light source 21, the unit light source 21 is easy to replace; the user may further set a color of the unit light source 21 according to a requirement.

Further, based on the foregoing embodiment, to protect the unit light source 21 and to avoid water condensation on a surface of the unit light source 21, a lamp shade 17 is disposed at a periphery of the light source and the light guide plate 16, where the lamp shade 17 is configured to protect the light source, and is preferably made of a material having high transmittance. Different growth stages of vegetables have different requirements on illumination. Therefore, as an optional implementation manner, the vegetable carrying box provided by this embodiment further includes a controller 18 for controlling light source luminance. The controller 18 is electrically connected to the light source, and is configured to adjust luminance of the light source according to an acquired illumination control signal.

It should be noted that the foregoing embodiments are merely intended for describing the technical solutions of the present invention, but not for limiting the present invention. Although the present invention is described in detail with reference to the foregoing embodiments, one of ordinary skill in the art should understand that they may still make modifications to the technical solutions described in the foregoing embodiments or make equivalent replacements to some technical features thereof, without departing from the scope of the appended claims.

## Claims

1. A vegetable carrying box, comprising a solution carrying box (7) provided with a high-level liquid inlet (1) and a low-level liquid outlet (5) that are located at opposite end portions of the solution carrying box (7),
**characterized in that**
an area, which is between the liquid inlet (1) and the liquid outlet (5), in the solution carrying box (7) is provided with protruding diversion partitions (3) to form a zigzag flow passage (2), and
an atomizer (6) is disposed in the flow passage (2).

2. The vegetable carrying box according to claim 1, wherein an atomizer cover plate (4) is disposed above the atomizer (6).

3. The vegetable carrying box according to claim 2, wherein the atomizer cover plate (4) comprises a top plate, wherein two sides of the top plate are connected to a supporting plate that bends downward, and a lower end of the supporting plate is fixedly connected to the solution carrying box (7).

4. The vegetable carrying box according to any one of claims 1 to 3, wherein the protruding diversion partitions (3) are arranged side by side in the solution carrying box (7), and every two adjacent protruding diversion partitions (3) are disposed at two opposite sides of the solution carrying box (7).

5. The vegetable carrying box according to claim 4, wherein the protruding diversion partitions (3) are parallel to each other.

6. The vegetable carrying box according to claim 5, wherein every two adjacent diversion partitions (3) have an overlapping portion in a projection direction perpendicular to the diversion partitions (3).

7. The vegetable carrying box according to any one of claims 1 to 3, wherein the protruding diversion partitions (3) are strip plates vertically disposed.

8. The vegetable carrying box according to any one of claims 1 to 3, wherein both axes of the liquid inlet (1) and the liquid outlet (5) are horizontally disposed and are parallel to each other.

9. The vegetable carrying box according to claim 6, wherein the liquid inlet (1) and the liquid outlet (5) are located at a same side of the solution carrying box (5).

10. The vegetable carrying box according to any one of claims 1 to 3, wherein the atomizer (6) is located at a middle part of the solution carrying box (7).

11. The vegetable carrying box according to claim 1, wherein the vegetable carrying box further comprises a vegetable shelf (8) disposed above the solution carrying box (7), and the vegetable shelf (8) is disposed above the top of the flow passage (2).

12. The vegetable carrying box according to claim 11, further comprising through holes (9) being formed in the vegetable shelf (8).

13. The vegetable carrying box according to claim 12, wherein at least one pluggable hole plug (10) is disposed inside at least one of the through holes (9).

14. The vegetable carrying box according to claim 12, wherein the vegetable shelf (8) has multiple through hole arranging areas, each of the through hole arranging areas has a cross-shaped rib (11), the cross-shaped rib (11) delimits the through hole arranging area into four quadrant areas, and each quadrant in the four quadrant areas is provided with one through hole (9).

## Patentansprüche

1. Gemüse tragender Kasten, umfassend einen eine Lösung tragenden Kasten (7), der mit einem oben liegenden Flüssigkeitseinlass (1) und einem unten liegenden Flüssigkeitsauslass (5), die sich an gegenüberliegenden Endabschnitten des eine Lösung tragenden Kastens (7) befinden, versehen ist, **dadurch gekennzeichnet, dass**
ein Bereich zwischen dem Flüssigkeitseinlass (1) und dem Flüssigkeitsauslass (5) in dem eine Lösung tragenden Kasten (7) mit vorspringenden Ablenktrennwänden (3) versehen ist, um einen Zickzackströmungskanal (2) zu bilden, und
ein Zerstäuber (6) in dem Strömungskanal (2) angeordnet ist.

2. Gemüse tragender Kasten nach Anspruch 1, wobei eine Zerstäuberabdeckplatte (4) über dem Zerstäuber (6) angeordnet ist.

3. Gemüse tragender Kasten nach Anspruch 2, wobei die Zerstäuberabdeckplatte (4) eine obere Platte umfasst, wobei zwei Seiten der oberen Platte mit einer nach unten gebogenen Tragplatte verbunden sind und ein unteres Ende der Tragplatte starr mit dem eine Lösung tragenden Kasten (7) verbunden ist.

4. Gemüse tragender Kasten nach einem der Ansprüche 1 bis 3, wobei die vorspringenden Ablenktrennwände (3) nebeneinander in dem eine Lösung tragenden Kasten (7) angeordnet sind und immer zwei benachbarte vorspringende Ablenktrennwände (3) an zwei gegenüberliegenden Seiten des eine Lösung tragenden Kastens (7) angeordnet sind.

5. Gemüse tragender Kasten nach Anspruch 4, wobei die vorspringenden Ablenktrennwände (3) parallel zueinander verlaufen.

6. Gemüse tragender Kasten nach Anspruch 5, wobei immer zwei benachbarte Ablenktrennwände (3) einen überlappenden Abschnitt in einer senkrecht zu den Ablenktrennwänden (3) verlaufenden Projektionsrichtung aufweisen.

7. Gemüse tragender Kasten nach einem der Ansprüche 1 bis 3, wobei die vorspringenden Ablenktrennwände (3) vertikal angeordnete streifenförmige Platten sind.

8. Gemüse tragender Kasten nach einem der Ansprüche 1 bis 3, wobei beide Achsen des Flüssigkeitseinlasses (1) und des Flüssigkeitsauslasses (5) horizontal angeordnet sind und parallel zueinander verlaufen.

9. Gemüse tragender Kasten nach Anspruch 6, wobei sich der Flüssigkeitseinlass (1) und der Flüssigkeitsauslass (5) an einer selben Seite des eine Lösung tragenden Kastens (7) befinden.

10. Gemüse tragender Kasten nach einem der Ansprüche 1 bis 3, wobei sich der Zerstäuber (6) an einem mittleren Teil des eine Lösung tragenden Kastens (7) befindet.

11. Gemüse tragender Kasten nach Anspruch 1, wobei der Gemüse tragende Kasten ferner einen über dem eine Lösung tragenden Kasten (7) angeordneten Gemüseträger (8) umfasst und der Gemüseträger (8) über der Oberseite des Strömungskanals (2) angeordnet ist.

12. Gemüse tragender Kasten nach Anspruch 11, ferner umfassend in dem Gemüseträger (8) ausgebildete Durchgangslöcher (9).

13. Gemüse tragender Kasten nach Anspruch 12, wobei mindestens ein steckbarer Lochstöpsel (10) in mindestens einem der Durchgangslöcher (9) angeordnet ist.

14. Gemüse tragender Kasten nach Anspruch 12, wobei der Gemüseträger (8) mehrere Durchgangsloch-Anordnungsbereiche aufweist, wobei jeder der Durchgangsloch-Anordnungsbereiche eine kreuzförmige Rippe (11) aufweist, die kreuzförmige Rippe (11) vier Quadrantenbereiche des Durchgangsloch-Anordnungsbereiches abgrenzt und jeder Quadrant in den vier Quadrantenbereichen mit einem Durchgangsloch (9) versehen ist.

## Revendications

1. Boîte de support pour légumes, comprenant une boîte de support pour solution (7) pourvue d'une entrée de liquide haute (1) et d'une sortie de liquide basse (5) qui sont situées sur des portions d'extrémité opposées de la boîte de support pour solution (7),
**caractérisée en ce que**
une zone, qui est située entre l'entrée de liquide (1) et la sortie de liquide (5), dans la boîte de support pour solution (7) est pourvue de cloisons de déviation en saillie (3) afin de former un passage d'écoulement (2) en zigzag, et
un atomiseur (6) est disposé dans le passage d'écoulement (2).

2. Boîte de support pour légume selon la revendication 1, dans laquelle une plaque de recouvrement d'atomiseur (4) est disposée au-dessus de l'atomiseur (6).

3. Boîte de support pour légume selon la revendication 2, dans laquelle la plaque de recouvrement d'atomiseur (4) comprend une plaque supérieure, deux côtés de la plaque supérieure étant reliés à une plaque de support qui est courbée vers le bas, et une extrémité inférieure de la plaque de support étant reliée fixement à la boîte de support pour solution (7).

4. Boîte de support pour légume selon une des revendications 1 à 3, dans laquelle les cloisons de déviation en saillie (3) sont disposées côte à côte dans la boîte de support pour solution (7), et toutes les deux cloisons de déviation en saillie (3) adjacentes sont disposées sur deux côtés opposés de la boîte de support pour solution (7).

5. Boîte de support pour légume selon la revendication 4, dans laquelle les cloisons de déviation en saillie (3) sont parallèles les unes aux autres.

6. Boîte de support pour légume selon la revendication 5, dans laquelle toutes les deux cloisons de déviation (3) adjacentes comportent une portion de chevauchement dans une direction de projection perpendiculaire aux cloisons de déviation (3).

7. Boîte de support pour légume selon une des revendications 1 à 3, dans laquelle les cloisons de déviation en saillie (3) sont des plaques en forme de bande disposées verticalement.

8. Boîte de support pour légume selon une des revendications 1 à 3, dans laquelle les deux axes de l'entrée de liquide (1) et de la sortie de liquide (5) sont disposés horizontalement et sont parallèles l'un à l'autre.

9. Boîte de support pour légume selon la revendication 6, dans laquelle l'entrée de liquide (1) et la sortie de liquide (5) sont situées d'un même côté de la boîte de support pour solution (7).

10. Boîte de support pour légume selon une des revendications 1 à 3, dans laquelle l'atomiseur (6) est situé sur une partie centrale de la boîte de support pour solution (7).

11. Boîte de support pour légume selon la revendication 1, dans laquelle la boîte de support pour légume comprend en outre une tablette à légumes (8) disposée au-dessus de la boîte de support pour solution (7), et la tablette à légumes (8) est disposée au-dessus de la partie supérieure du passage d'écoulement (2).

12. Boîte de support pour légume selon la revendication 11, comprenant en outre des trous traversants (9) qui sont formés dans la tablette à légumes (8).

13. Boîte de support pour légume selon la revendication 12, dans laquelle au moins un bouchon de trou (10) insérable est disposé à l'intérieur d'au moins un des trous traversants (9).

14. Boîte de support pour légume selon la revendication 12, dans laquelle la tablette à légumes (8) comporte plusieurs zones d'agencement de trous traversants, chacune des zones d'agencement de trous traversants comporte une nervure en forme de croix (11), la nervure en forme de croix (11) délimite la zone d'agencement de trous traversants en quatre zones de quadrant, et chaque quadrant dans les quatre zones de quadrant est pourvu d'un trou traversant (9).
